# EUROPÄISCHE PATENTSCHRIFT

(11) **EP 1 099 611 B1**
(45) Veröffentlichungstag und Bekanntmachung des Hinweises auf die Patenterteilung: **01.12.2004**
(21) Anmeldenummer: 00122298.3
(22) Anmeldetag: 20.10.2000
(51) Int. Cl.: B60T 8/94, B60T 8/32, B60T 17/18, B60T 13/68

(54) **Druckmittelbetätigte Fahrzeugbremsanlage**
Pressure actuated braking system for vehicles
Système de freinage actionné par pression pour véhicules

(30) Priorität: 12.11.1999 DE 19954568
(43) Veröffentlichungstag der Anmeldung: 16.05.2001
(73) Patentinhaber: KNORR-BREMSE SYSTEME FÜR NUTZFAHRZEUGE GMBH, 80809 München (DE)
(72) Erfinder: Stumpe, Werner, 70374 Stuttgart (DE)

(56) Entgegenhaltungen:
- EP-A- 0 187 901
- EP-A- 0 726 189
- EP-A- 0 738 640
- EP-B- 0 726 190

## Beschreibung

### Stand der Technik

Die Erfindung geht aus von einer druckmittelbetätigten Fahrzeugbremsanlage nach der Gattung des Patentanspruchs 1.

Eine derartige Fahrzeugbremsanlage ist aus der EP 0 726 190 B1 bekannt. Die bekannte Bremsanlage ist für ein Nutzfahrzeug vorgesehen und hat einen pneumatisch betätigbaren Hinterachs-Bremskreis für die beiden Räder der Hinterachse und einen pneumatisch betätigbaren Vorderachs-Bremskreis für die der Vorderachse. Bei Ausfall des einen Bremskreises soll der andere Bremskreis das Nutzfahrzeug noch ausreichend verzögern.

Dem Hinterachs-Bremskreis sind zwei als FederspeicherBremszylinder (Kombibremszylinder) ausgebildete Bremszylinder zugeordnet, die über eine erste Steuerventileinrichtung in Abhängigkeit von einem dem Hinterachs-Bremskreis zugeordneten Steuersignal eines Mehrkreis-Bremswertgebers mit einem Druckluftbehälter für den Hinterachs-Bremskreis verbindbar sind. Der Vorderachs-Bremskreis hat einen Bremszylinder für das rechte Vorderrad und einen Bremszylinder für das linke Vorderrad, welche über eine zweite Steuerventileinrichtung in Abhängigkeit von einem dem Vorderachs-Bremskreis zugeordneten Steuersignal des Mehrkreis-Bremswertgebers mit einem Druckluftbehälter für den Vorderachs-Bremskreis verbindbar sind. Die zweite Steuerventileinrichtung weist einen mit dem Druckluftbehälter für den Vorderachs-Bremskreis verbundenen ersten Druckeingang und einen mit einem Steuerausgang eines Betriebsbremsventils verbundenen zweiten Druckeingang auf, durch welchen ein vom Betriebsbremsventil abgeleiteter Vorderachs-Steuerdruck eingesteuert wird. Im weiteren hat die zweite Steuerventileinrichtung einen mit dem ersten Bremszylinder und dem zweiten Bremszylinder verbundenen Druckausgang.

Bedingt durch die dynamische Achslastverlagerung bei einem Bremsvorgang muß der größte Anteil der Bremskraft von den Vorderrädern aufgebracht werden. Bei Nutzfahrzeugen mit hoher Vorderachslast und zumindest zeitweise niedriger Hinterachslast, wie z.B. bei Sattelzugmaschinen, trifft dies in besonderem Maße zu, da wegen ihres kurzen Radstandes und ihrer großen Schwerpunkthöhe im Fall einer Bremsung eine hohe dynamische Achslastverlagerung auftritt. Bei Ausfall des Vorderachs-Bremskreises ist daher nicht mehr sichergestellt, daß die nun von den allein durch die Hinterräder gelieferte Bremskraft ausreicht, um die vom Gesetzgeber vorgeschriebene Verzögerung aufzubringen. Ein solcher Ausfall des Vorderachs-Bremskreises wird z.B. durch den Riß einer Druckluftleitung oder durch Undichtigkeiten im Vorderachs-Bremskreis hervorgerufen, so daß mit der Zeit der Druck im Druckluftbehälter des Vorderachs-Bremskreises sinkt.

Um diesem Problem zu begegnen, ist bei der bekannten Fahrzeugbremsanlage zwischen dem Druckausgang der zweiten Steuerventileinrichtung und dem ersten Bremszylinder für das rechte Vorderrad eine Umschalt-Ventilanordnung in Form eines Relaisventils vorgesehen, dessen Relaiskolben von einem vom Mehrkreis-Bremswertgeber abgeleiteten Hinterachs-Steuerdruck derart drucksteuerbar ist, daß der Bremszylinder des rechten Vorderrades mit einem vom Druckluftbehälter des Vorderachs-Bremskreises unabhängigen Druckluftbehälter verbindbar ist. Das bekannte Relaisventil hat ein als kombiniertes Einlaß- und Auslaßventil ausgebildetes Doppelsitzventil. Bei intaktem Vorderachs-Bremskreis ist beim Bremsen eine Wirkfläche des Relaiskolbens durch den Vorderachs-Steuerdruck beaufschlagt, während die andere Wirkfläche durch den Hinterachs-Steuerdruck beaufschlagt ist. Hierdurch werden am Relaiskolben gegeneinander gerichetete Kräfte erzeugt, wobei die Größe der Wirkflächen des Relaiskolbens so gewählt ist, daß das Auslaßventil beim Bremsen geöffnet gehalten wird und somit der von der zweiten Steuerventileinrichtung erzeugte Vorderachs-Bremsdruck durch das geöffnete Auslaßventil zum ersten Bremszylinder durchgesteuert werden kann.

Bei Ausfall des Vorderachs-Bremskreises sinkt der Druck in dem dem Vorderachs-Bremskreis zugeordneten Druckluftbehälter und auch der Vorderachs-Steuerdruck auf die eine Wirkfläche des Relaiskolbens. Hierdurch schaltet der Relaiskolben das Doppelsitzventil in einen Notbrems-Funktionstellung, weil er durch den an der anderen Wirkfläche noch anstehenden Hinterachs-Steuerdruck in eine das Auslaßventil schließende und das Einlaßventil öffende Position gedrängt ist. Durch das geöffnete Einlaßventil kann nun die Druckluft des vom Druckluftbehälter des Vorderachs-Bremskreises unabhängigen Druckluftbehälters zum Bremszylinder des rechten Vorderrades geschaltet werden, um dort als Ersatz für den ausgefallenen Vorderachs-Bremsdruck zu dienen.

Die Steuerdrücke für den Hinterachs- bzw. den Vorderachsbremskreis können jedoch auch bei intakter Bremsanlage stark variieren, z.B. wenn aufgrund unterschiedlicher Bremsleitungslängen Druck-Laufzeitunterschiede im Vorderachs- und Hinterachs-Bremskreis auftreten. Dann würde z.B. bei einem voreilenden Hinterachs-Steuerdruck das bekannte Relaisventil in die Notbrems-Funktionsstellung schalten, obwohl ein Vorderachs-Steuerdruck vorhanden ist, welcher dem Hinterachs-Steuerdruck lediglich nacheilt. Durch das dann geschlossene Auslaßventil wird der nacheilende Vorderachs-Steuerdruck vom Relaiskolben abgekoppelt, so daß die einmal eingenommene Notbrems-Funktionstellung des Relaiskolbens für eine Bremsung nicht mehr rückgängig zu machen ist. Als Folge hiervon wird für die Bremsung ausschließlich Druckluft aus dem als Redundanz vorgesehenen Druckluftbehälter verwendet, was nicht erwünscht ist.

### Vorteile der Erfindung

Die erfindungsgemäße druckmittelbetätigte Fahrzeugbremsanlage hat demgegenüber den Vorteil, daß eine Abkoppelung des Steuerdrucks des Vorderachs-Bremskreises nicht stattfinden kann, da dieser ständig am Ventilbetätigungsorgan der Umschalt-Ventilanordnung ansteht. Bei dynamischen Steuerdruckschwankungen kann daher eine kurzzeitige Umschaltung der Umschalt-Ventilanordnung in die Notbrems-Funktionsstellung rückgängig gemacht werden, sobald der nacheilende Steuerdruck ein bestimmtes Druckniveau erreicht hat. Bei dauerhafter Druckdifferenz zwischen Hinterachs- und Vorderachs-Steuerdruck wird demgegenüber der jeweilige Schaltzustand der Umschalt-Ventilanordnung wegen der ständig am Ventilbetätigungsorgan anstehenden Steuerdrücke beibehalten.

Durch die in den Unteransprüchen aufgeführten Maßnahmen sind vorteilhafte Weiterbildungen und Verbesserungen der im Patentanspruch 1 angegebenen druckmittelbetätigten Fahrzeugbremsanlage möglich.

### Zeichnungen

Ausführungsbeispiele der Erfindung sind in den Zeichnungen dargestellt und in der nachfolgenden Beschreibung näher erläutert.

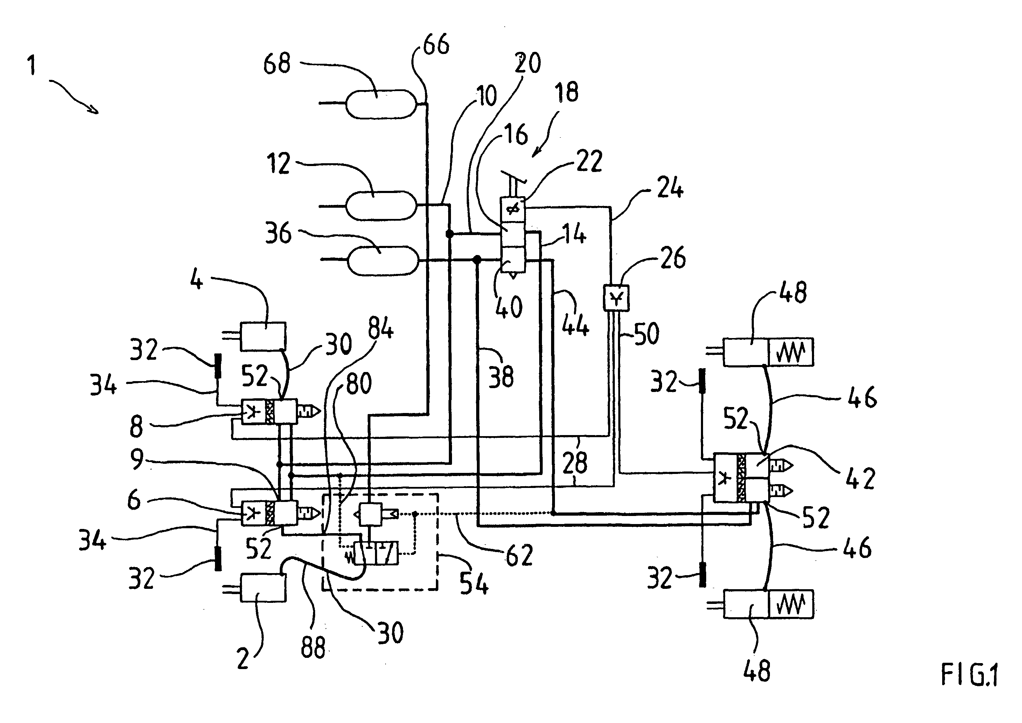

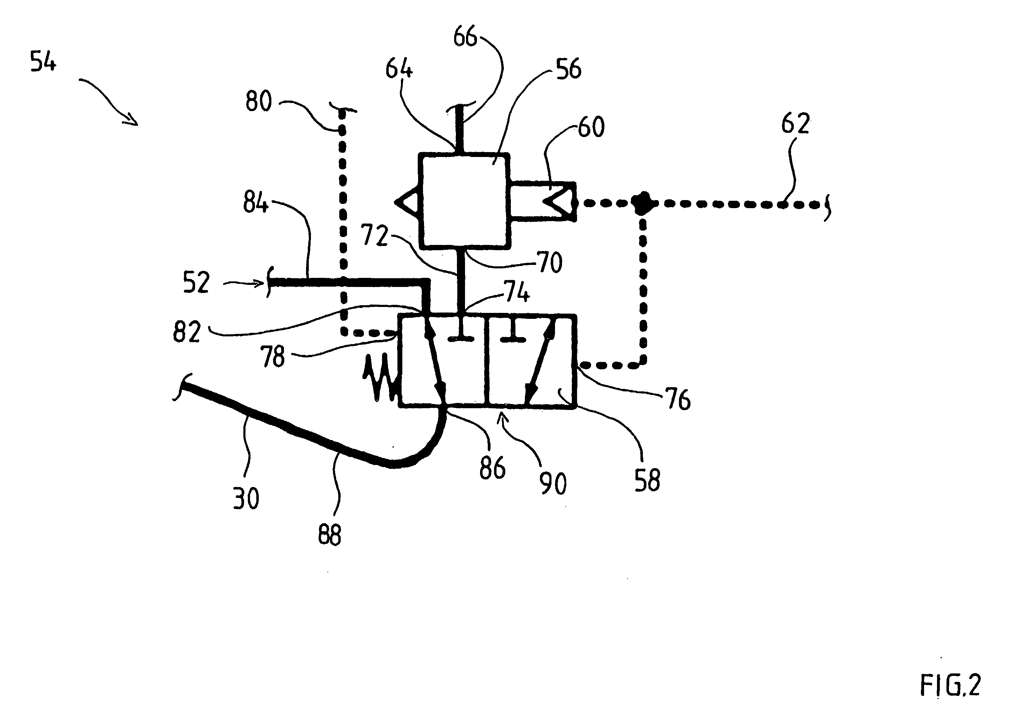

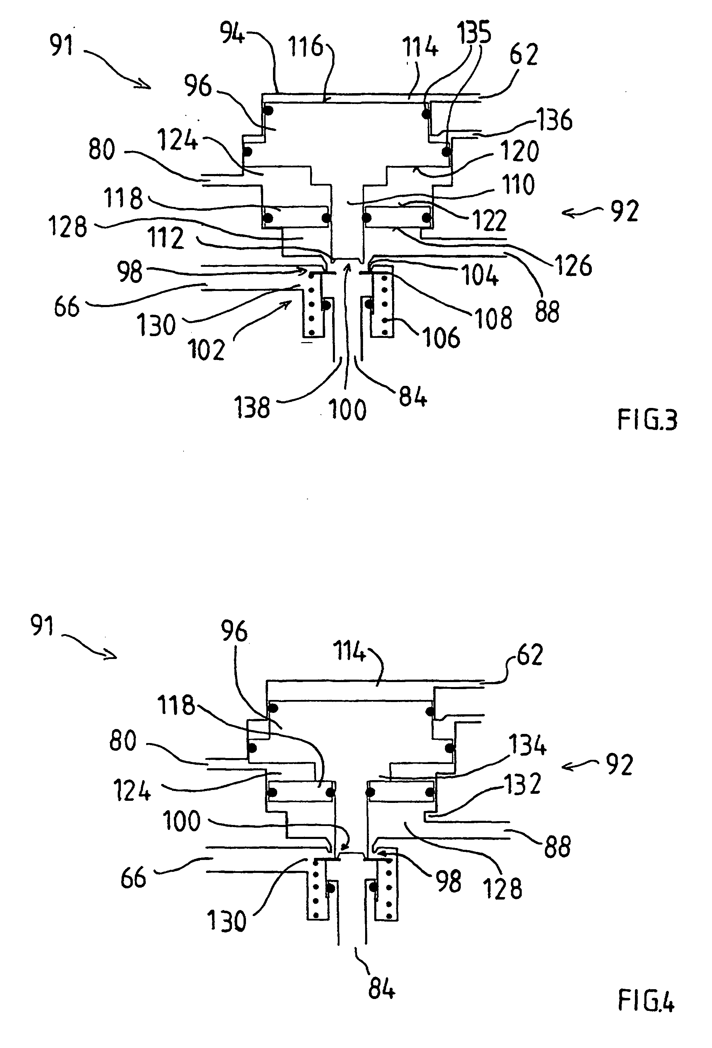

Fig.1 zeigt einen Schaltplan eines bevorzugten Ausführungsbeispiels der druckmittelbetätigten Fahrzeugbremsanlage gemäß der Erfindung mit einer Umschalt-Ventilanordnung. Fig.2 zeigt die Umschalt-Ventilanordnung von Fig.1 in vergrößerter Darstellung. Fig.3 zeigt in stark schematisierter Weise eine Schnittdarstellung einer weiteren Umschalt-Ventilanordnung in einer Brems-Stellung und Fig.4 die Umschalt-Ventilanordnung von Fig.3 in einer Notbrems-Stellung.

### Beschreibung der Ausführungsbeispiele

Die in Fig.1 insgesamt mit 1 bezeichnete druckmittelbetätigte Fahrzeugbremsanlage ist gemäß der bevorzugten Ausführungsform eine elektronisch geregelte Bremsanlage für Nutzfahrzeuge mit vorrangigen elektro-pneumatischen Bremskreisen und mit nachrangigen pneumatischen Rückhaltkreisen als unterlegte Sicherheitsebene.

Bei der elektronisch geregelten Bremsanlage 1 sind die Vorderachsbremsen durch einen Bremszylinder 2 des linken Vorderrades und einen Bremszylinder 4 des rechten Vorderrades repräsentiert, welche jeweils von einem Ein-Kanal-Druckregelmodul 6,8 angesteuert sind. Die Druckregelmodule 6,8 der Vorderachse sind zum einen mit ihren Druckeingängen 9 über eine Vorratsdruckleitung 10 mit einem Druckluftspeicher 12 für die Vorderachse und andererseits mit einer Steuerdruckleitung 14 mit der Steuerseite eines Vorderachskanals 16 eines Betriebsbremsventils 18 verbunden.

Der Vorderachskanal 16 des Betriebsbremsventils 18 steht eingangseitig durch einen Zweig 20 der Vorratsdruckleitung 10 mit dem Druckluftspeicher 12 der Vorderachse in Verbindung, um in Abhängigkeit von der Kraft, mit welcher der Fahrer das Bremspedal betätigt, proportionale Steuerdrucksignale in die Steuerdruckleitung 14 der Vorderachse einzusteuern.

Zusätzlich wird bei Betätigung der Bremse in einem elektrischen Teil 22 des Betriebsbremsventils 18 ein proportionales elektrisches Steuersignal erzeugt und über eine elektrische Leitung 24 an eine zentrale elektronische Steuereinheit 26 geleitet, welche mittels je einer elektrischen Steuerleitung 28 einen Druckregelmodul 6, 8 der Vorderachse ansteuert. Abhängig von den elektrischen Steuersignalen wird in den Druckregelmodulen 6, 8 der Vorderachse in bekannter Weise ein modulierter Steuerdruck erzeugt und über pneumatische Bremsdruckleitungen 30 in die Bremszylinder 2, 4 eingesteuert. Der Druckluftspeicher 12 für die Vorderachse, der elektrische Teil 22 des Betriebsbremsventils 18, die zentrale elektronische Steuereinheit 26, die elektrischen Steuerleitungen 28, die beiden Druckregelmodule 6,8, die Bremsdruckleitungen 30 und die Bremszylinder 2, 4 bilden zusammen einen elektro-pneumatischen Vorderachs-Bremskreis.

Die Schaltungslogik der Druckregelmodule 6, 8 behandelt die elektrischen Steuersignale des elektro-pneumatischen Vorderachs-Bremskreises vorrangig vor den über die Steuerdruckleitung 14 eingesteuerten Steuerdrucksignalen eines pneumatischen Vorderachs-Bremskreises, welcher als Rückhalt-Bremskreis eine redundante Steuerfunktion ausübt, wenn der elektro-pneumatische Vorderachs-Bremskreis gestört ist. Der elektro-pneumatische Vorderachs-Bremskreis überschneidet sich teilweise mit pneumatischen Vorderachs-Bremskreis, der den Druckluftspeicher 12 für die Vorderachse, den Vorderachskanal 16 des Betriebsbremsventils 18, die Steuerdruckleitung 14, die beiden Druckregelmodule 6, 8, die Bremsdruckleitungen 30 und die beiden Bremszylinder 2, 4 umfaßt.

Die beiden Druckregelmodule 6, 8 der Vorderachse ermöglichen neben der Regelung des Bremsdruckes durch integrierte ABS (Anti-Blockier-Sytem)-Funktionen eine individuelle Anpassung des Bremsdruckes an das Drehverhalten der gebremsten Vorderräder, welches von radbezogenen Drehzahlsensoren 32 gemessen und mittels elektrischer Leitungen 34 an die Druckregelmodule 6, 8 geleitet wird.

In analoger Weise sind ein elektro-pneumatischer Hinterachs-Bremskreis und ein diesem gegenüber nachrangiger pneumatischer Hinterachs-Bremskreis aufgebaut, wobei für die Hinterachse ein eigener Druckluftspeicher 36 vorgesehen ist, welcher durch eine Vorratsdruckleitung 38 einerseits mit dem Eingang eines Hinterachskanals 40 des Betriebsbremsventils 18 und andererseits mit einem zweikanaligen Druckregelmodul 42 der Hinterachse in Verbindung steht, wobei je ein Kanal für ein Hinterrad vorgesehen ist.

Ausgangsseitig steuert das Betriebsbremsventil 18 zum einen mittels einer Steuerdruckleitung 44 Steuerdrucksignale in den Druckregelmodul 42 der Hinterachse ein, welcher über pneumatische Bremsdruckleitungen 46 mit Kombibremszylindern 48 des rechten und linken Hinterrades in Verbindung steht. Zum andem werden die vom Betriebsbremsventil 18 über die elektrische Leitung 24 an die zentrale elektronische Steuereinheit 26 ausgesteuerten elektrischen Signale mittels einer elektrischen Steuerleitung 50 in den Druckregelmodul 42 der Hinterachse eingesteuert.

In Abhängigkeit der von der zentralen elektronischen Steuereinheit 26 über die elektrischen Steuerleitungen 28, 50 herangeführten elektrischen Steuersignale bzw. bei Ausfall der elektro-pneumatischen Steuerkreise in Abhängigkeit der über die pneumatischen Steuerdruckleitungen 14, 44 herangeführten Steuerdrücke werden in den Druckregelmoduln 6, 8, 42 der Vorderachse und der Hinterachse aus den über die Vorratsdruckleitungen 10, 38 herangeführten Vorratsdrücke jeweils achsweise die Bremsdrücke erzeugt, welche jeweils an einem Druckausgang 52 eines Druckregelmoduls 6, 8, 42 anstehen und über die pneumatischen Bremsdruckleitungen 30, 46 in die nachgeschalteten Bremszylinder 2, 4 bzw. Kombibremszylinder 48 eingesteuert werden.

Dem Druckausgang 52 des linken Druckregelmoduls 6 und dem Bremszylinder 2 des linken Vorderades ist eine Umschalt-Ventilanordnung 54 zwischengeschaltet, welche in Fig.1 gestrichelt umrandet und in Fig.2 vergrößert dargestellt ist. Die Umschalt-Ventilanordnung 54 besteht vorzugsweise aus einem Relaisventil 56 und einem diesem nachgeschalteten 3/2-Wege-Ventil 58, wobei eine als Betätigungsmittel 60 dargestellte Steuerkammer des Relaisventils 56 mittels einer pneumatischen Verbindungsleitung 62 mit der Steuerdruckleitung 44 des pneumatischen Hinterachs-Bremskreises in Verbindung steht. Ein Relaisventil-Eingang 64 des Relaisventils 56 ist über eine Vorratsdruckleitung 66 mit einem weiteren Druckluftspeicher 68 und ein Relaisventil-Ausgang 70 über eine Verbindungsleitung 72 mit einem ersten Eingang 74 des 3/2-Wege-Ventils 58 verbunden.

Das 312-Wege-Ventil 58 ist mit einem ersten Steuereingang 76 ebenfalls an die die pneumatischen Steuerdrucksignale des Hinterachs-Bremskreises führende Verbindungsleitung 62 angeschlossen, mit einem zweiten Steuereingang 78 steht es mit einer von der Steuerdruckleitung 14 der Vorderachse abgezweigten pneumatischen Verbindungsleitung 80 in Verbindung. Ein zweiter Eingang 82 des 3/2-Wege-Ventils 58 ist über einen ersten Teil 84 der Bremsdruckleitung 30 des linken Vorderrades mit dem Druckausgang 52 des Druckregelmoduls 6 des linken Vorderrades und ein Ausgang 86 des 3/2-Wege Ventils 58 über einen zweiten Teil 88 dieser Bremsdruckleitung 30 mit dem Bremszylinder 2 des linken Vorderrades verbunden.

Die Umschalt-Ventilanordnung gemäß der in Fig.1 dargestellten Ausführungsform hat bei einer über das Betriebsbremsventil 18 einge leiteten Bremsung folgende Funktionsweise:

Sind im elektro-pneumatischen und/oder im pneumatischen Vorderachs-Bremskreis keine Druckverluste vorhanden, steht in der Steuerdruckleitung 14 des pneumatischen Vorderachs-Bremskreises und in der von dieser abgezweigten pneumatischen Verbindungsleltung 80 ein Steuerdruck p_{VA} an, welcher in den zweiten Steuereingang 78 des 3/2-Wege-Ventils 58 eingesteuert wird. Gleichzeitig sind die Steuerdruckleitung 44 des pneumatischen Hinterachs-Bremskreises sowie die von dieser abgezweigte pneumatische Verbindungsleitung 62 mit einem Steuerdruck PHA beaufschlagt, welcher am ersten Steuereingang 76 des 312-Wege-Ventils 58 ansteht. Das Ventilbetätigungsorgan 90 des in Fig.1 und Fig.2 nur symbolisch dargestellten 3/2-Wege-Ventils 58 ist daher auf seiner einen Wirkfläche ständig durch den Steuerdruck p_{VA} und an seiner anderen Wirkfläche ständig durch den Steuerdruck p_{HA} belastet. In Fig.1 und Fig.2 ist das 3/2-Wege-Ventil 58 in seiner Brems-Grundstellung dargestellt, in welcher dessen zweiter Eingang 82 zu dessen Ausgang 86 durchgeschaltet ist. Somit wird in der Brems-Grundstellung der von dem dem linken Vorderrad zugeordneten Druckregelmodul 6 ausgesteuerte Bremsdruck durch das 3/2-Wege-Ventil an den Bremszylinder 2 des linken Vorderrades durchgeschaltet. Zugleich ist der mit dem Relaisventil-Ausgang 70 verbundene erste Eingang 74 des 3/2-Wege-Ventils gesperrt.

Bei Druckabfall im pneumatischen Vorderachs-Bremskreis oder im elektro-pneumatischen Vorderachs-Bremskreis während einer Bremsung, z.B. durch Riß der Bremsdruckleitung 30 zwischen dem Druckregelmodul 6 und dem Bremszylinder 2 des linken Vorderrades, sinkt der Steuerdruck p_{VA} des pneumatischen Vorderachs-Bremskreises ab. Bei niedrigem Steuerdruck p_{VA} wird das Ventilbetätigungsorgan 90 des 3/2-Wege-Ventils 58 durch den höheren Steuerdruck p_{HA} aus der dargestellten Brems-Grundstellung in eine Notbrems-Stellung gedrängt, in welcher der erste Eingang 74 des 3/2-Wege-Ventils 58 mit dessen Ausgang 86 verbunden ist und daher der am Relaisventil-Ausgang 70 anstehende Druck zum Bremszylinder 2 des linken Vorderrades durchgeschaltet wird. Zugleich wird der zweite Eingang 82 des 3/2-Wege-Ventils 58 gesperrt. Da das Relaisventil 56 durch den vom Betriebsbremsventil 18 ausgesteuerten gestuften Steuerdruck p_{HA} angesteuert wird, ist auch der vom weiteren Druckluftspeicher 68 abgeleitete und über das Relaisventil 56 zum 3/2-Wege-Ventil 58 geschaltete Druck entsprechend gestuft. Dieser gestufte und in den Bremszylinder 2 des linken Vorderrades eingesteuerte Druck führt schließlich zu einer Abbremsung des linken Vorderrades.

In Fig.3 und Fig.4 ist eine weitere Ausführungsform einer Umschalt-Ventilanordnung 91 in stark schematisierter Weise dargestellt, bei welcher sie durch ein Relaisventil 92 realisiert ist. Das Relaisventil 92 hat ein Ventilgehäuse 94, innerhalb dessen ein Relaiskolben 96 längsbeweglich angeordnet ist, um ein aus einem Einlaßventil 98 und einem Auslaßventil 100 bestehendes Doppelsitzventil 102 zu betätigen. Das Einlaßventil 98 beinhaltet einen am Ventilgehäuse 94 angeordneten äußeren Ventilsitz 104, gegen welchen mittels einer Ventilfeder 106 ein als lochscheibenförmiger Ventilteller 108 ausgebildeter Ventilkörper vorgespannt ist. Der Relaiskolben 96 hat einen endseitigen Kolbenzapfen 110, dessen Rand als ringförmiger, innerer Ventilsitz 112 ausgebildet ist, welcher zusammen mit dem Ventilteller 108 das Auslaßventil 100 des Doppelsitzventils 102 bildet.

Eine erste Steuerkammer 114 des Relaisventils 92 ist durch eine obere Wirkfläche 116 des Relaiskolbens 96 und durch das Ventilgehäuse 94 begrenzt. Der Kolbenzapfen 110 des Relaiskolbens 96 ist durch eine lochscheibenförmige Trennwand 118 koaxial umschlossen, welche an ihm längsverschieblich geführt ist. Von der unteren Wirkfläche 120 des Relaiskolbens 96 und einer oberen Wirkfläche 122 der Trennwand 118 wird eine zweite Steuerkammer 124 und von einer unteren Wirkfläche 126 der Trennwand 118 und dem Boden des Ventilgehäuses 94 wird eine Arbeitskammer 128 begrenzt. Eine als Ringkammer ausgebildete Druckmitteleingangskammer 130 des Relaisventils umschließt das Doppelsitzventil 102. Die Längsverschieblichkeit der Trennwand 118 ist zur Arbeitskammer 128 hin durch einen Absatz 132 am Ventilgehäuse 94 begrenzt (Fig.4). Ein weiterer Absatz 134 am Kolbenzapfen 110 des Relaiskolbens 96 sorgt für einen oberen Anschlag für die Trennwand 118. Dichtungen 135 zwischen dem Relaiskolben 96 bzw. zwischen der Trennwand 118 und dem Ventilgehäuse 94 dichten die einzelnen Ventilkammem gegeneinander ab.

Die Umschalt-Ventilanordnung 91 gemäß der vorstehend beschriebenen Ausführungsform ersetzt die in Fig.1 gestrichelt umrandet gezeichnete Ausführungsform 54 und ist wie folgt in die Fahrzeugbremsanlage 1 integriert :

Die erste Steuerkammer 114 ist an die in Fig.1 mit der Bezugszahl 62 bezeichnete und von der Steuerdruckleitung 44 des pneumatischen Hinterachs-Bremskreises abgezweigte pneumatische Verbindungsleitung und die zweite Steuerkammer 124 an die in Fig.1 mit der Bezugszahl 80 bezeichnete und von der Steuerdruckleitung 14 des pneumatischen Vorderachs-Bremskreises abgezweigte pneumatische Verbindungsleitung angeschlossen. Zwischen der ersten und der zweiten Steuerkammer 114, 124 ist ein Auslaß 136 zur Atmosphäre hin vorgesehen. Ein bodenseitiger Entlüftungsanschluß 138 des Relaisventils 92 ist mit dem zum Druckausgang 52 des Druckregelmoduls 6 führenden ersten Teil 84 der Bremsdruckleitung 30 des linken Vorderrades verbunden. Die Druckmitteleingangskammer 130 ist mit der in Fig.1 mit der Bezugszahl 66 bezeichneten Vorratsdruckleitung des weiteren Druckluftspeichers 68 verbunden. Die Arbeitskammer 128 steht mit dem zum Bremszylinder 2 des linken Vorderrades führenden zweiten Teil 88 der Bremsdruckleitung 30 in Verbindung.

Die Umschalt-Ventilanordnung 91 gemäß der in Fig.3 und Fig.4 dargestellten Ausführungsform hat bei einer über das Betriebsbremsventil eingeleiteten Bremsung folgende Funktionsweise:
Bei intakten Vorderachs-Bremskreisen wirkt gemäß Fig.3 in der ersten Steuerkammer 114 des Relaisventils 92 der Druck p_{HA} und in der zweiten Steuerkammer 124 der Druck p_{VA}. Die obere Wirkfläche 116 des Relaiskolbens 96 ist vorzugsweise kleiner als dessen untere Wirkfläche 120, so daß unter der Annahme ungefähr gleich großer Drücke p_{HA} und p_{VA} am Relaiskolben 96 eine resultierende Kraft nach oben wirkt, wodurch dieser nach oben gedrängt und der innere Ventilsitz 112 vom Ventilteller 108 abgehoben ist. In dieser Brems-Grundstellung des Relaisventils 92 ist das Auslaßventil 100 geöffnet und der vom Druckausgang 52 des Druckregelmoduls 6 über den ersten Teil 84 der Bremsdruckleitung 30 in den Entlüftungsanschluß 138 eingesteuerte Bremsdruck wird durch das geöffnete Auslaßventil 100 in die Arbeitskammer 128 und von dort über den zweiten Teil 88 der Bremsdruckleitung 30 in den Bremszylinder 2 des linken Vorderrades durchgesteuert. Durch den Druck der Ventilfeder 106 ist der Ventilteller 108 gegen den äußeren Ventilsitz 104 gedrückt, wodurch das Einlaßventil 98 geschlossen bleibt. Die obere Wirkfläche 122 der Trennwand 118 ist hierbei durch den Vorderachs-Steuerdruck p_{VA} und deren untere Wirkfläche 126 durch den aus dem Druckregelmodul 6 eingesteuerten Bremsdruck beaufschlagt, wobei die gegeneinander gerichteten Kräfte sich annähernd aufheben.
Bei Druckabfall im pneumatischen und/oder elektro-pneumatischen Vorderachs-Bremskreis während einer Bremsung sinkt der Vorderachs-Steuerdruck p_{VA} in der zweiten Steuerkammer 124 ab und der Relaiskolben 96 wird aufgrund des nach wie vor auf seine obere Wirkfläche 116 wirkenden Hinterachs-Steuerdrucks p_{HA} nach unten gedrängt, wodurch der Kolbenzapfen 110 den inneren Ventilsitz 112 auf den Ventilteller 108 dichtend drückt und das Auslaßventil 100 schließt. Gleichzeitig wird der Ventilteller 108 vom äußeren Ventilsitz 104 abgehoben und hierdurch das Einlaßventil 98 geöffnet, wie in Fig.4 dargestellt ist. Das Relaisventil 92 befindet sich dann in seiner Notbrems-Stellung. Durch das mittels des Relaiskolbens 96 geöffnete Einlaßventil 98 wird die Druckmitteleingangskammer 130 mit der Arbeitskammer 128 verbunden und die in der Druckmitteleingangskammer 130 anstehende Druckluft aus dem weiteren Druckluftspeicher 68 kann über den zweiten Teil 88 der Bremsdruckleitung 30 in den Bremszylinder 2 des linken Vorderades strömen und dort eine Bremsung auslösen. Da die zweite Steuerkammer 124 annähernd drucklos ist, wirkt fast keine Druckkraft mehr auf die obere Wirkfläche 122 der Trennwand 118, an deren unterer Wirkfläche 126 der Druck aus dem weiteren Druckluftspeicher 68 ansteht, so daß in der Notbrems-Stellung die Trennwand 118 gegen den Absatz 134 des Kolbenzapfens 110 des Relaiskolbens 96 geschoben ist. Die Größe der Wirkflächen 116, 120 des Relaiskolbens 96 und die der Wirkflächen 122, 126 der Trennwand 118 sowie die Federrate der Ventilfeder 106 sind im Einzelfall so aufeinander abzustimmen, daß die oben beschriebenen Schaltfunktionen durchgeführt werden können.

Für den Fall, daß der Vorderachs-Steuerdruck p_{VA} verspätet aufgebaut wurde, z.B. aufgrund unterschiedlicher Längen der Steuerdruckleitungen 14, 44 für die Vorderachse und die Hinterachse, besteht ein Druckmangel in der zweiten Steuerkammer 124 nur kurzzeitig, so daß der Relaiskolben 96 das Relaisventil 92 zwar zunächst in seine Notbrems-Stellung schaltet. Sobald in der zweiten Steuerkammer 124 aber der nacheilende Vorderachs-Steuerdruck p_{VA} ansteigt, steht dieser sofort und direkt an der unteren Wirkfläche 120 des Relaiskolbens 96 an, welcher daraufhin nach oben gedrängt wird, wodurch das Einlaßventil 98 geschlossen und damit eine weitere Zufuhr von Druckluft aus dem weiteren Druckluftspeicher 68 zum Bremszylinder 2 des linken Vorderrades unterbunden wird. Gleichzeitig wird durch den sich nach oben bewegenden Relaiskolben 96 das Auslaßventil 100 geöffnet und das Relaisventil 92 befindet sich wieder in seiner in Fig.3 gezeigten Brems-Grundstellung, in welcher der Bremsdruck vom Druckluftspeicher 12 der Vorderachse abgeleitet wird.

## Patentansprüche

1. Druckmittelbetätigte Fahrzeugbremsanlage (1) mit wenigstens einem ersten Bremskreis und einem zweiten Bremskreis mit folgenden Merkmalen :
a) Dem ersten Bremskreis ist wenigstens ein Bremszylinder (48) zugeordnet, der über eine erste Steuerventileinrichtung (42) in Abhängigkeit von einem dem ersten Bremskreis zugeordneten Steuersignal eines Mehrkreis-Bremswertgebers (18) mit einer Druckmittelquelle (36) für den ersten Bremskreis verbindbar ist,
b) dem zweiten Bremskreis sind ein erster Bremszylinder (2) und ein zweiter Bremszylinder (4) zugeordnet, die über eine zweite Steuerventileinrichtung (6, 8) in Abhängigkeit von einem dem zweiten Bremskreis zugeordneten Steuersignal des Mehrkreis-Bremswertgebers (18) mit einer zweiten Druckmittelquelle (12) für den zweiten Bremskreis verbindbar sind,
c) die zweite Steuerventileinrichtung (6, 8) weist einen mit der Druckmittelquelle (12) für den zweiten Bremskreis verbundenen Druckmitteleingang (9) und einen mit dem ersten Bremszylinder (2) verbundenen Druckmittelausgang (52) auf,
d) dem Druckmittelausgang (52) der zweiten Steuerventileinrichtung (6, 8) und dem ersten Bremszylinder (2) des zweiten Bremskreises ist eine Umschalt-Ventilanordnung (54; 91) zwischengeordnet, von welcher ein Ventilbetätigungsorgan (90; 96) von dem dem ersten Bremskreis zugeordneten Steuersignal derart drucksteuerbar ist, daß der erste Bremszylinder (2) mit einer von der Druckmittelquelle (12) des zweiten Bremskreises unabhängigen Druckmittelquelle (68) verbindbar ist,
**dadurch gekennzeichnet, daß**
e) das dem zweiten Bremskreis zugeordnete Steuersignal am Ventilbetätigungsorgan (90; 96) der Umschalt-Ventilanordnung (54; 91) ständig ansteht.

2. Druckmittelbetätigte Fahrzeugbremsanlage nach Anspruch 1, **dadurch gekennzeichnet, daß** die Umschalt-Ventilanordnung (54) ein Relaisventil (56) und ein diesem nachgeschaltetes 312-Wege-Ventil (58) beinhaltet, wobei:
a) Ein Relaisventil-Eingang (64) mit der von der Druckmittelquelle (12) des zweiten Bremskreises unabhängigen Druckmittelquelle (68), ein Relaisventil-Ausgang (70) mit einem ersten Eingang (74) des 3/2-Wege-Ventils (58) und ein Relaisventil-Betätigungsmittel (60) durch das dem ersten Bremskreis zugeordnete Steuersignal betätigbar ist;
b) ein zweiter Eingang (82) des 312-Wege-Ventils (58) mit dem Druckmittelausgang (52) der zweiten Steuerventileinrichtung (6, 8) und ein Ausgang (86) des 312-Wege-Ventils (58) mit dem ersten Bremszylinder (2) des zweiten Bremskreises verbunden ist;
c) das Ventilbetätigungsorgan (90) des 3/2-Wege-Ventils (58) einerseits durch das dem ersten Bremskreis zugeordnete Steuersignal und andererseits durch das dem zweiten Bremskreis zugeordnete Steuersignal betätigbar ist;
d) bei gleichzeitigem Vorhandensein beider Steuersignale der zweite Eingang (82) des 3/2-Wege-Ventils (58) zu dessen Ausgang (86) durchgeschaltet ist und wobei
e) bei Vorhandensein des dem ersten Bremskreis zugeordneten Steuersignals und bei Ausbleiben oder Fehlen des dem zweiten Bremskreis zugeordneten Steuersignals vom Relaisventil (56) in Abhängigkeit von dem dem ersten Bremskreis zugeordneten Steuersignal ein gestufter Bremsdruck an den ersten Eingang (74) des 312-Wege-Ventils (58) aussteuerbar und der erste Eingang (74) des 3/2-Wege-Ventils (58) zu dessen Ausgang durchschaltbar ist.

3. Druckmittelbetätigte Fahrzeugbremsanlage nach Anspruch 1, **dadurch gekennzeichnet, daß** die Umschalt-Ventilanordnung (91) ein Relaisventil (92) mit einem Relaiskolben (96) zum Betätigen eines Doppelsitzventils (102) beinhaltet, wobei:
a) Mittels eines Auslaßventils (100) des Doppelsitzventils (102) ein mit dem Druckmittelausgang (52) der zweiten Steuerventileinrichtung (6, 8) in Verbindung stehender Entlüftungsanschluß (138) des Relaisventils (92) mit einer mit dem ersten Bremszylinder (2) des zweiten Bremskreises in Verbindungs stehenden Arbeitskammer (128) des Relaisventils (92) verbindbar ist, und
. b) mittels eines Einlaßventils (98) des Doppelsitzventils (102) die mit einer Druckmitteleingangskammer (130) des Relaisventils (92) in Verbindung stehende, von der Druckmittelquelle (12) des zweiten Bremskreises unabhängige Druckmittelquelle (68) mit der Arbeitskammer (128) verbindbar ist, und
c) der Relaiskolben (96) durch das dem ersten Bremskreis zugeordnete Steuersignal in eine das Einlaßventil (98) öffnende und das Auslaßventil (100) schließende Stellung und durch das dem zweiten Bremskreis zugeordnete Steuersignal in eine das Auslaßventil (100) öffnende und das Einlaßventil (98) schließende Stellung drängbar ist.

4. Druckmittelbetätigte Fahrzeugbremsanlage nach einem der Ansprüch 2 oder 3, **dadurch gekennzeichnet, daß** das dem ersten Bremskreis zugeordnete Steuersignal ein erster pneumatischer Steuerdruck ist , welcher über eine erste Steuerdruckleitung (44) in die erste Steuerventileinrichtung (42) einsteuerbar ist, und daß das dem zweiten Bremskreis zugeordnete Steuersignal ein zweiter pneumatischer Steuerdruck ist, welcher über eine zweite Steuerdruckleitung (14) in die zweite Steuerventileinrichtung (6, 8) einsteuerbar ist.

5. Druckmittelbetätigte Fahrzeugbremsanlage nach Anspruch 4, **dadurch gekennzeichnet, daß** von der ersten Steuerdruckleitung (44) und von der zweiten Steuerdruckleitung (14) jeweils eine pneumatische Verbindungsleitung (62, 80) zur Umschalt-Ventilanordnung (54; 91) abzweigt.

6. Druckmittelbetätigte Fahrzeugbremsanlage nach Anspruch 4 und 5, **dadurch gekennzeichnet, daß** zwischen einem Ventilgehäuse (94) des Relaisventils und (92) einer Wirkfläche (116) des Relaiskolbens (96) eine erste Steuerkammer (114) und zwischen einer anderen Wirkfläche (120) des Relaiskolbens (96) und einer entlang dem Relaiskolben (96) längsverschieblich geführten Trennwand (118) eine zweite Steuerkammer (124) und zwischen der Trennwand (118) und dem Ventilgehäuse (94) die Arbeitskammer (128) gebildet ist, wobei das Relaisventil (92) derart ausgebildet ist, daß bei gleichzeitiger Druckbeaufschlagung der ersten Steuerkammer (114) mit dem ersten Steuerdruck und der zweiten Steuerkammer (124) mit dem zweiten Steuerdruck das Einlaßventil (98) geschlossen und das Auslaßventil (100) geöffnet ist und daß bei Druckbeaufschlagung der ersten Steuerkammer (114) mit dem ersten Steuerdruck und einem Fehlen des zweiten Steuerdrucks in der zweiten Steuerkammer (124) das Auslaßventil (100) geschlossen und das Einlaßventil (98) geöffnet ist.

7. Druckmittelbetätigte Fahrzeugbremsanlage nach einem der vorhergehenden Ansprüche, **dadurch gekennzeichnet, daß** sie ein elektronisch geregeltes Bremssystem beinhaltet, wobei bei Betätigung des Mehrkreis-Bremswertgebers (18) ein proportionales elektrisches Signal für eine zentrale elektronische Steuereinheit (26) erzeugbar ist, durch welche die erste und die zweite Steuerventilanordnung (6, 8, 42) vorrangig ansteuerbar sind.

8. Druckmittelbetätigte Fahrzeugbremsanlage nach Anspruch 7 , **dadurch gekennzeichnet, daß** die erste Steuerventileinrichtung einen Zwei-Kanal-Druckregelmodul (42) beinhaltet, welcher mit der ersten Steuerdruckleitung (44) und mit der zentralen elektronischen Steuereinheit (26) ansteuerbar verbunden ist, wobei je ein Kanal einem Bremszylinder (48) des ersten Bremskreises zugeordnet ist.

9. Druckmittelbetätigte Fahrzeugbremsanlage nach einem der Ansprüche 7 oder 8, **dadurch gekennzeichnet, daß** die zweite Steuerventileinrichtung zwei Ein-Kanal-Druckregelmodule (6, 8) beinhaltet, welche mit der zweiten Steuerdruckleitung (14) und mit der zentralen elektronischen Steuereinheit (26) ansteuerbar verbunden sind, wobei je ein Druckregelmodul (6, 8) einem Bremszylinder (2, 4) des zweiten Bremskreises zugeordnet ist.

10. Druckmittelbetätigte Fahrzeugbremsanlage nach einem der vorhergehenden Ansprüche, **dadurch gekennzeichnet, daß** die erste Steuerventileinrichtung (42) mittels einer ersten Druckmittelleitung (38) mit der dem ersten Bremskreis zugeordneten Druckmittelquelle (36) und die zweite Steuerventileinrichtung (6, 8) mittels einer zweiten Druckmittelleitung (10) mit der dem zweiten Bremskreis zugeordneten Druckmittelquelle (12) verbunden ist.

## Claims

1. Vehicle brake system (1) operated by a pressurised medium, comprising at least one first brake circuit and one second brake circuit, presenting the following features:
(a) at least a brake cylinder (48) is associated with said first brake circuit, adapted to be connected to one source (36) of pressurised medium for said first brake circuit via a first control valve means (42) in response to a control signal of a multi-circuit braking power generator (18), which is associated with said first brake circuit;
(b) a first brake cylinder (2) and a second brake cylinder (4) are associated with said second brake circuit, which are adapted to be connected to a second source of pressurised medium (12) for said second brake circuit via a second control valve means (6, 8) in response to a control signal of said multi-circuit braking power generator (18), which is associated with said second brake circuit;
(c) said second control valve means (6, 8) comprises an admission port (9) of pressurised medium, which connected to said source of pressurised medium (12) for said second brake circuit, and a discharge port of pressurised medium (52), which is connected to said first brake cylinder (2);
(d) a change-over valve means (54; 91) is arranged between the compressed-medium outlet (52) of said second change-over valve means (6, 8) and said first brake cylinder (2) of said second brake circuit, with this change-over means being adapted to control, in terms of pressure, a valve actuator (90; 96) by the control signal associated with said first brake circuit in such a way that said first brake cylinder (2) can be connected to a source of pressurised medium (68) independent of said source of pressurised medium (12) of said second brake circuit,
**characterised in that**
(e) said control signal associated with said second brake circuit is permanently applied to said valve actuator (90; 96) of said change-over valve means (54; 91).

2. Vehicle brake system operated by a pressurised medium, according to Claim 1, **characterised in that** said change-over valve means (54) comprises a relay valve (56) and a 3/2-way valve (58) downstream thereof, wherein:
(a) a relay valve admission port (64) with said source (68) of pressurised medium, which is independent of said source (12) of pressurised medium of said second brake circuit, a relay valve discharge port (70) with a first admission port (74) of said 3/2-way valve (58) and relay valve discharge port (60) are adapted to be controlled by said control signal associated with said first brake circuit;
(b) a second admission port (82) of said 3/2-way valve (58) is connected to said pressurised-medium discharge port (52) of said second control valve means (6, 8) whilst an discharge port (86) of said 3/2-way valve (58) is connected to said first brake cylinder (2) of said second brake circuit ;
(c) said valve actuator (90) of said 3/2-way valve (58) is adapted to be controlled, on the one hand, by said control signal associated with said first brake circuit and, on the other hand, by said control signal associated with said second brake circuit;
(d) when the two control signals are present simultaneously, said second admission port (82) of said 3/2-way valve (58) is connected to the discharge port thereof (86), and wherein
(e) when said control signal associated with said first brake circuit is present and when the control signal associated with said second brake circuit is absent or missing, it is possible to regulate a graduated braking pressure by said relay valve (56) in response to said control signal associated with said first brake circuit at said first admission port (74) of said 3/2-way valve (58) and said first admission port (74) of said 3/2-way valve (58) can be connected to the discharge port thereof.

3. Vehicle brake system operated by a pressurised medium, according to Claim 1, **characterised in that** said change-over valve means (91) includes a relay valve (92) provided with a relay plunger (96) for controlling a twin-seat valve (102), wherein
(a) a venting port (138) of said relay valve (92) can be connected to an operating chamber (128) of said relay valve (92), in communication with said first brake cylinder (2) of said second brake circuit by means of a discharge valve (100) of said twin-seat valve (102), which venting port is in communication with said pressurised-medium discharge port (52) of said second control valve means (6, 8), and
(b) said source (68) of pressurised medium, which is communication with a pressurised-medium admission chamber (130) of said relay valve (92) and which is independent of said source (12) of pressurised medium of said second brake circuit, can be connected to said operating chamber (128) by means of an admission valve (98) of said twin-seat valve (102), and
(c) said relay plunger (96) is adapted to be urged by a control signal associated with said first brake circuit into a position for opening said admission valve (98) and for closing said discharge valve (100) and by said control signal associated with said second brake circuit into a position for opening said discharge valve (100) and for closing said admission valve (98).

4. Vehicle brake system operated by a pressurised medium, according to any of the Claims 2 or 3, **characterised in that** said control signal associated with said first brake circuit is a first pneumatic pilot pressure adapted to be controlled via a first pilot pressure pipe (44) in said first control valve means (42), and that said control signal associated with said second brake circuit is a second pneumatic pilot pressure adapted to be controlled via a second pilot pressure pipe (14) in said second control valve means (6, 8).

5. Vehicle brake system operated by a pressurised medium, according to Claim 4, **characterised in that** a respective pneumatic connecting pipe (62, 80) branches off from said first pilot pressure pipe (44) and from said second pilot pressure pipe (14) to said change-over valve means (54; 91).

6. Vehicle brake system operated by a pressurised medium, according to the Claims 4 and 5, **characterised in that** a first control chamber (114) is formed between a valve body (94) of said relay valve and (92) of an operating surface (116) of said relay plunger (96), and a second control chamber (124) is formed on the other operating surface (120) of said relay plunger (96) and a partitioning wall (118) guided for longitudinal displacement along said relay plunger, and said operating chamber (128) is formed between said partitioning wall (118) and said valve body (94), with said relay valve (92) being configured in such a way that when said first control chamber (114) exposed to the action of a first pilot pressure and, at the same time, said second control chamber (124) is exposed to the action of said second pilot pressure, said admission valve (98) is closed and said discharge valve (100) is open, and when said first control chamber (114) is exposed to the action of said first pilot pressure and said second pilot pressure is absent in said second control chamber (124), said discharge valve (100) is closed and said admission valve (98) is open.

7. Vehicle brake system operated by a pressurised medium, according to any of the preceding Claims, **characterised in that** it comprises an electronically controlled braking system, wherein, when said multi-circuit braking power generator (18) is operated, an electrical proportional signal can be produced for a central electronic controller (26) by means of which said first and second control valve means (6, 8, 42) can be controlled with priority.

8. Vehicle brake system operated by a pressurised medium, according to Claim 7, **characterised in that** said first control valve means comprise a two-way pressure regulating module (42) that is connected to said first pilot pressure pipe (44) and to said central electronic controller (26) in a controllable manner, with one respective way being with a brake cylinder (48) of said first brake circuit.

9. Vehicle brake system operated by a pressurised medium, according to any of the Claims 7 or 8, **characterised in that** said second control valve means comprise two single-way pressure regulating modules (6, 8) that are connected to said second pilot pressure pipe (14) and to said central electronic controller (26) in a controllable manner, with a respective pressure regulating module (6, 8) being associated with a brake cylinder (2, 4) of said second brake circuit.

10. Vehicle brake system operated by a pressurised medium, according to any of the preceding Claims, **characterised in that** said first control valve means (42) is connected by means of a first pressurised-medium pipe (38) to said source (36) of pressurised medium associated with said first brake circuit, whereas said second control valve means (6, 8) is connected by means of a second pressurised-medium pipe (10) to said source (12) of pressurised medium associated with said second brake circuit.

## Revendications

1. Installation de freinage (1) pour un véhicule, actionnée par un milieu sous pression, comprenant au moins un premier circuit de freinage et un deuxième circuit de freinage, aux caractéristiques suivantes :
(a) au moins un cylindre de frein (48) est affecté audit premier circuit de freinage, qui est apte à être relié à une source (36) de milieu sous pression pour ledit premier circuit de freinage via un premier moyen à clapet de distribution (42) en réponse à un signal de commande d'un générateur d'effort de freinage à plusieurs circuits (18), qui est affecté audit premier circuit de freinage ;
(b) un premier cylindre de frein (2) et un deuxième cylindre de frein (4) sont affectés audit deuxième circuit de freinage, qui sont aptes à être relié à une deuxième source de milieu sous pression (12) pour ledit deuxième circuit de freinage via un deuxième moyen à clapet de distribution (6, 8) en réponse à un signal de commande dudit générateur d'effort de freinage à plusieurs circuits (18), qui est affecté audit deuxième circuit de freinage ;
(c) ledit deuxième moyen à clapet de distribution (6, 8) comprend un orifice d'entrée (9) de milieu sous pression, qui est relié à ladite source de milieu sous pression (12) pour ledit deuxième circuit de freinage, et un orifice de sortie de milieu sous pression (52), qui est relié audit premier cylindre de frein (2) ;
(d) un moyen (54; 91) à soupape d'inversion est disposé entre la sortie de milieu sous pression (52) dudit deuxième moyen (6, 8) à clapet de distribution et ledit premier cylindre de frein (2) dudit deuxième circuit de freinage, ce moyen d'inversion étant apte à commander en pression un actionneur de soupape (90; 96) par le signal de commande affecté audit premier circuit de freinage, d'une telle manière, que ledit premier cylindre de frein (2) puisse se raccorder à une source de milieu sous pression (68) indépendante de ladite source de milieu sous pression (12) dudit deuxième circuit de freinage,
caractérisée en ce
(e) que ledit signal de commande affecté audit deuxième circuit de freinage est constamment appliqué audit actionneur de soupape (90; 96) dudit moyen à soupape d'inversion (54; 91).

2. Installation de freinage pour un véhicule, actionnée par un milieu sous pression, selon la revendication 1, **caractérisée en ce que** ledit moyen à soupape d'inversion (54) comprend une soupape à relais (56) et une soupape à 3/2 voies (58) en aval, dans laquelle :
(a) une entrée de soupape à relais (64) avec ladite source (68) de milieu sous pression, qui est indépendante de ladite source (12) de milieu sous pression dudit deuxième circuit de freinage, une sortie de soupape à relais (70) avec une première entrée (74) de ladite soupape à 3/2 voies (58) et un moyen actionneur de soupape à relais (60) sont aptes à être commandé par ledit signal de commande affecté audit premier circuit de freinage ;
(b) une deuxième entrée (82) de ladite soupape à 3/2 voies (58) est reliée audit orifice de sortie du milieu sous pression (52) dudit deuxième moyen à clapet de distribution (6, 8) pendant qu'une sortie (86) de ladite soupape à 3/2 voies (58) est reliée audit premier cylindre de frein (2) dudit deuxième circuit de freinage ;
(c) ledit actionneur de soupape (90) de ladite soupape à 3/2 voies (58) est apte à être commandé, d'un côté, par ledit signal de commande affecté audit premier circuit de freinage et, d'autre côté, par ledit signal de commande affecté audit deuxième circuit de freinage ;
(d) quand les deux signaux de commande sont présents en même temps, ladite deuxième entrée (82) de ladite soupape à 3/2 voies (58) est reliée à sa sortie (86), et dans laquelle
(e) quand ledit signal de commande affecté audit premier circuit de freinage est présent et quand le signal de commande affecté audit deuxième circuit de freinage n'est pas présent ou manque, il est possible d'ajuster une pression de freinage gradué par ladite soupape à relais (56) en réponse audit signal de commande affecté audit premier circuit de freinage à ladite première entrée (74) de ladite soupape à 3/2 voies (58) et ladite première entrée (74) de ladite soupape à 3/2 voies (58) se peuvent relier à sa sortie.

3. Installation de freinage pour un véhicule, actionnée par un milieu sous pression, selon la revendication 1, **caractérisée en ce que** ledit moyen à soupape d'inversion (91 ) renferme une soupape à relais (92) munie d'un piston à relais (96) pour la commande d'une soupape à double siège (102), dans laquelle
(a) un raccord d'aération (138) de ladite soupape à relais (92) peut se raccorder à une chambre de travail (128) de ladite soupape à relais (92), qui se trouve en communication avec ledit premier cylindre de frein (2) dudit deuxième circuit de freinage moyennant une soupape de décharge (100) de ladite soupape à double siège (102), ce raccord d'aération se trouvant en communication avec ledit orifice de sortie du milieu sous pression (52) dudit deuxième moyen à clapet de distribution (6, 8), et
(b) ladite source (68) de milieu sous pression, qui se trouve en communication avec une chambre d'admission de milieu sous pression (130) de ladite soupape à relais (92) et qui est indépendante de ladite source (12) de milieu sous pression dudit deuxième circuit de freinage, peut se raccorder à ladite chambre de travail (128) moyennant une soupape d'admission (98) de ladite soupape à double siège (102), et
(c) ledit piston de relais (96) est apte à être mis en contrainte par un signal de commande affecté audit premier circuit de freinage en une position d'ouverture de ladite soupape d'admission (98) et de fermeture de ladite soupape de décharge (100) et par ledit signal de commande affecté audit deuxième circuit de freinage en une position d'ouverture de ladite soupape de décharge (100) et de fermeture de ladite soupape d'admission (98).

4. Installation de freinage pour un véhicule, actionnée par un milieu sous pression, selon une quelconque des revendications 2 ou 3, **caractérisée en ce que** ledit signal de commande affecté audit premier circuit de freinage est une première pression pilote pneumatique, qui est apte à être commandée via un premier passage de pression pilote (44) dans ledit premier moyen à clapet de distribution (42), et **en ce que** ledit signal de commande affecté audit deuxième circuit de freinage est une deuxième pression pilote pneumatique, qui est apte à être commandée via un deuxième passage de pression pilote (14) dans ledit deuxième moyen à clapet de distribution (6, 8).

5. Installation de freinage pour un véhicule, actionnée par un milieu sous pression, selon la revendication 4, **caractérisée en ce qu'**un conduit respectif de connexion pneumatique (62, 80) se branche à partir dudit premier passage de pression pilote (44) et dudit deuxième passage de pression pilote (14) audit moyen à soupape d'inversion (54; 91 ).

6. Installation de freinage pour un véhicule, actionnée par un milieu sous pression, selon les revendications 4 et 5, **caractérisée en ce qu'**une première chambre de commande (114) est formée entre un corps de soupape (94) de ladite soupape à relais et (92) d'une aire opératrice (116) dudit piston de relais (96), et une deuxième chambre de commande (124) est formée une autre aire opératrice (120) dudit piston de relais (96) et une cloison (118) guidé pour un déplacement longitudinal le long dudit piston de relais, et ladite chambre de travail (128) est formée entre ladite cloison (118) et ledit corps de soupape (94), à ladite soupape à relais (92) étant configurée d'une telle manière, que, quand ladite première chambre de commande (114) subit l'action d'une première pression pilote et, en même temps, ladite deuxième chambre de commande (124) subit l'action de ladite deuxième pression pilote, ladite soupape d'admission (98) est fermée et ladite soupape de décharge (100) est ouverte, et, quand ladite première chambre de commande (114) subit l'action de ladite première pression pilote et ladite deuxième pression pilote n'est pas présente dans ladite deuxième chambre de commande (124), ladite soupape de décharge (100) est fermée et ladite soupape d'admission (98) est ouverte.

7. Installation de freinage pour un véhicule, actionnée par un milieu sous pression, selon une quelconque des revendications précédentes, **caractérisée en ce qu'**elle comprend un système de freinage à commande électronique, dans lequel, quand ledit générateur d'effort de freinage à plusieurs circuit (18) est actionné, un signal électrique proportionnel peut être engendré pour une unité de commande électronique centrale (26), moyennant laquelle lesdits premier et deuxième moyens à clapet de distribution (6, 8, 42) peuvent être commandé à priorité.

8. Installation de freinage pour un véhicule, actionnée par un milieu sous pression, selon la revendication 7, **caractérisée en ce que** ledit premier moyen à clapet de distribution comprend un module régulateur de pression à deux voies (42), qui est relié audit premier passage de pression pilote (44) et à ladite unité de commande électronique centrale (26) d'une manière commandable, à une voie respective étant affectée à un cylindre de frein (48) dudit premier circuit de freinage.

9. Installation de freinage pour un véhicule, actionnée par un milieu sous pression, selon une quelconque des revendications 7 ou 8, **caractérisée en ce que** ledit deuxième moyen à clapet de distribution comprend deux modules régulateurs de pression à une seule voie (6, 8), qui sont reliés audit deuxième passage de pression pilote (14) et à ladite unité de commande électronique centrale (26) d'une manière commandable, à un module régulateur de pression respectif (6, 8) étant affecté à un cylindre de frein (2, 4) dudit deuxième circuit de freinage.

10. Installation de freinage pour un véhicule, actionnée par un milieu sous pression, selon une quelconque des revendications précédentes, **caractérisée en ce que** ledit premier moyen à clapet de distribution (42) est relié, moyennant un premier conduit de milieu sous pression (38), à ladite source (36) de milieu sous pression affectée audit premier circuit de freinage, pendant que ledit deuxième moyen à clapet de distribution (6, 8) est relié, moyennant un deuxième conduit de milieu sous pression (10), à ladite source (12) de milieu sous pression, qui est affectée audit deuxième circuit de freinage.
